# EUROPÄISCHE PATENTSCHRIFT

(11) **EP 3 035 005 B1**
(45) Veröffentlichungstag und Bekanntmachung des Hinweises auf die Patenterteilung: **01.06.2022**
(21) Anmeldenummer: 15199291.4
(22) Anmeldetag: 10.12.2015
(51) Int. Cl.: G01F 1/075

(54) **ROTORBAUGRUPPE, DURCHFLUSSMESSER, ROTOR UND WASSERFÜHRENDES HAUSHALTSGERÄT**
ROTOR ASSEMBLY, FLOW METER, ROTOR AND WATER-BEARING HOUSEHOLD DEVICE
ENSEMBLE ROTORIQUE, DEBITMETRE, ROTOR ET APPAREIL TRANSPORTANT DE L'EAU

(30) Priorität: 18.12.2014 DE 102014226444
(43) Veröffentlichungstag der Anmeldung: 22.06.2016
(73) Patentinhaber: Robert Bosch GmbH, 70442 Stuttgart (DE)
(72) Erfinder: LOSER, Florian, 83022 Rosenheim (DE); ENGLISCH, Christian, 83324 Ruhpolding (DE); MAYER, Gebhard, 83278 Traunstein (DE)
(74) Vertreter: Bee, Joachim

(56) Entgegenhaltungen:
- EP-A1- 0 121 734
- EP-A1- 2 017 585
- EP-A1- 2 302 334
- EP-A2- 1 693 651
- EP-A2- 2 071 296
- WO-A1-2012/138239
- DE-A1- 10 014 106
- US-B2- 6 789 434

## Beschreibung

Die Erfindung betrifft eine Rotorbaugruppe für einen Durchflussmesser zum Messen eines Fluid-Durchflusses in einer Fluidleitung nach dem Oberbegriff des Patentanspruchs 1. Die Rotorbaugruppe weist einen Rotor auf, der zumindest abschnittsweise innerhalb der Fluidleitung angeordnet werden kann. Zudem betrifft die Erfindung einen Rotor für eine Rotorbaugruppe, einen Durchflussmesser mit Rotorbaugruppe sowie ein wasserführendes Haushaltsgerät mit einem Durchflussmesser.

EP 2 071 296 A2, EP 1 693 651 A2, EP 2 017 585 A1, DE 100 14 106 A1, EP 2 302 334 A1, US 6 789 434 B2, WO 2012/138239 A1 und EP 0 121 734 A1 offenbaren jeweils eine Rotorbaugruppe für einen Durchflussmesser zum Messen eines Fluid-Durchflusses in einer Fluidleitung.

Moderne wasserführende Haushaltsgeräte wie Durchlauferhitzer sind regelmäßig mit einem Durchflussmesser zur Durchflussmessung bzw. Volumenstrommessung ausgestattet. Derartige bekannte Durchflussmesser haben einen zumindest abschnittsweise in einer Fluidleitung angeordneten Rotor sowie eine außerhalb der Fluidleitung angeordnete Sensoreinrichtung, die der Erfassung einer Drehzahl des Rotors und damit eines Volumens an durchströmendem Fluid dient. Der Rotor kann ein Flügelrad sein, auf dessen Flügel durch die Fluidleitung strömendes Fluid (wie beispielsweise Wasser) so auftrifft, dass das Flügelrad zum Rotieren gebracht wird.

Der Rotor ist im Durchflussmesser üblicherweise so in einem Gehäuse angeordnet, dass das Fluid an einer Eintrittsöffnung in den Rotor eintritt, die Achse umläuft und den Rotor dabei antreibt und schließlich an einer Austrittsöffnung aus dem Rotor wieder austritt.

Für ein leichtes Einsetzen und ggf. Austauschen des Rotors kann dieser auf der Achse vormontiert und fixiert sein, die ihrerseits in einer Gehäuseverschlusskappe mit Dichtung verankert ist. Die so gebildete Baugruppe aus Rotor und Verschlusskappe kann dann leicht in das Gehäuse eingesetzt werden und die entsprechende Einsetzöffnung verschließen. Zur Vermeidung von Reibungsverlusten ist der eingesetzte Rotor von einem Gehäuseboden an der der Gehäuseverschlusskappe gegenüberliegenden Seite beabstandet.

Die Fluidbahn verläuft im Wesentlichen in einer orthogonal zur Achse liegenden Ebene. Beim Umlauf des Fluids um die Achse wirken jedoch zusätzlich zum Strömungssog Zentrifugalkräfte auf das Fluid, die es in die Richtung der Außenperipherie des Rotors treiben. Damit entsteht ein Sog, der Fluid von der der Verschlusskappe gegenüberliegenden Seite her in den Rotor nachströmen lässt. Bei der herkömmlichen Ausgestaltung des Rotors führen diese Strömungen und die daraus resultierenden Verwirbelungen im Fluid zu einer ungleichmäßigen Beanspruchung des Rotors und damit zu hohem Verschleiß.

Aufgabe der vorliegenden Erfindung ist es, einen Durchflussmesser sowie eine Rotorbaugruppe für einen Durchflussmesser zum Messen eines Durchflusses eines Fluids in einer Fluidleitung bereitzustellen, die die vorgenannten Nachteile beseitigt. Weiterhin ist es Aufgabe der Erfindung, ein wasserführendes Haushaltsgerät mit dem Durchflussmesser sowie einen Rotor für die Rotorbaugruppe oder für den Durchflussmesser bereitzustellen.

Diese Aufgaben werden gelöst durch eine Rotorbaugruppe mit den Merkmalen des Patentanspruchs 1, durch einen Durchflussmesser mit den Merkmalen des Patentanspruchs 6, durch ein wasserführen des Haushaltsgerät mit den Merkmalen des Patentanspruchs 9 und durch einen Rotor mit den Merkmalen des Patentanspruchs 10. Vorteilhafte Aus- und Weiterbildungen, die einzeln oder in Kombination miteinander eingesetzt werden können, sind Gegenstand der abhängigen Ansprüche und der folgenden Beschreibung.

Eine erfindungsgemäße Rotorbaugruppe für einen Durchflussmesser zum Messen eines Fluid-Durchflusses in einer Fluidleitung hat einen Rotor und eine Gehäuseverschlusskappe. Die Gehäuseverschlusskappe ist dazu eingerichtet, ein Gehäuse für den Rotor in der Fluidleitung zu verschließen.

Der Rotor ist um eine Rotorachse rotierbar an der Gehäuseverschlusskappe montiert und weist mindestens einen radial von der Rotorachse abstehenden Antriebsflügel auf. Zwischen dem mindestens einen Antriebsflügel und der Gehäuseverschlusskappe ist ein Fluiddurchlass ausgebildet, der beispielsweise ein Spalt oder eine sonstige Öffnung sein kann, durch den bzw. durch die Fluid hindurchströmen kann.

Wenn die Rotorbaugruppe in das Gehäuse für den Rotor eines Durchflussmessers eingesetzt ist, führt die Fluidleitung durch das Gehäuse, so dass hindurchströmendes Fluid den Rotor antreiben kann. Vorzugsweise ist die Stromführung dabei so, dass das Fluid von einer Eintrittstelle in den Rotor zu einer Austrittstelle aus dem Rotor geführt wird und dabei einen Richtungswechsel um etwa 180° vornimmt. Wenn somit Fluid durch das Gehäuse strömt und die Achse umläuft, bewirken die auftretenden Zentrifugalkräfte bei einer derartigen (beispielsweise ∩-förmigen, ⊂-förmigen oder ⊃-förmigen) Strömungsführung im Wendebereich (d.h. im Bereich des Richtungswechsels), dass das Fluid nach außen, also in die Richtung der Rotorperipherie gedrängt wird. Wie oben erwähnt wurde, bewirkt diese Strömung, dass Fluid von der Seite (also aus einer Richtung parallel zur Rotationsachse) in den Rotor eingesogen wird. Die erfindungsgemäße Rotorbaugruppe erlaubt dabei einen seitlichen Zustrom von beiden Seiten des Rotors, nämlich nicht nur von der Seite her, die der Gehäuseverschlusskappe gegenüber liegt, sondern auch von der Seite der Gehäuseverschlusskappe her: Dies wird durch den Fluiddurchlass zwischen dem mindestens einen Antriebsflügel und der Gehäuseverschlusskappe ermöglicht, der den Nachfluss des Fluids erlaubt. Der somit beiderseitige Zufluss bedeutet eine gleichmäßige Krafteinwirkung, wodurch verschleißintensive asymmetrische Belastungen vermieden werden.

Vorzugsweise ist der Fluiddurchlass zwischen dem mindestens einen Antriebsflügel und der Gehäuseverschlusskappe (in einer Richtung parallel zur Rotorachse) mindestens 2mm breit, bevorzugter mindestens 4mm.

Der Rotor ist vorzugsweise dazu eingerichtet, zum Messen des Fluid-Durchflusses mindestens teilweise so in der Fluidleitung angeordnet zu werden, dass die Rotorachse im Wesentlichen horizontal verläuft.

Der Rotor kann zusätzlich einen oder mehrere weitere radial von der Rotorachse abstehende Antriebsflügel aufweisen. Dies ermöglicht einen gleichmäßigen Antrieb des Rotors durch das durchströmende Fluid, insbesondere wenn alle Antriebsflügel einer bevorzugten Ausführungsform gemäß gleichmäßig um die Rotorachse herum verteilt sind.

Die Antriebsflügel sind an der der Gehäuseverschlusskappe zugewandten Seite vorzugsweise so voneinander getrennt, dass ein Fluidzustrom zwischen die Antriebsflügel von dieser Seite möglich ist.

Vorzugsweise sind die Antriebsflügel (wie auch der oben genannte mindestens eine Antriebsflügel) ebenfalls so angeordnet, dass zwischen ihnen und der Gehäuseverschlusskappe jeweils ein Fluiddurchlass eingerichtet ist. Insbesondere können die Fluiddurchlässe Teil einer um die Rotorachse herum verlaufenden ringförmigen Materialaussparung zwischen den Antriebsflügeln und der Gehäuseverschlusskappe sein, die dort einen Fluiddurchfluss ermöglicht.

Ein derartiger Aufbau ermöglicht einen symmetrischen seitlichen Fluidzustrom und reduziert oder vermeidet damit ungleichmäßige, verschleißintensive Einflüsse.

Gemäß einer bevorzugten Ausführungsform der vorliegenden Erfindung ist die Ausdehnung des mindestens einen Antriebsflügels in eine Richtung parallel zur Rotorachse höchstens 8-mal, bevorzugter höchstens 6-mal, noch bevorzugter höchstens 4-mal so groß wie eine Breite des Fluiddurchlasses, also wie dessen Ausdehnung in die Richtung parallel zur Rotorachse.

Diese Verhältnisse sind vorteilhaft, weil damit die von der Ausdehnung des Antriebsflügels abhängige Verdrängung des Fluids nach außen auf den durch den Fluiddurchlass möglichen Fluidnachstrom abgestimmt ist.

Die Rotorbaugruppe ist vorzugsweise dazu eingerichtet, in ein Gehäuse eingesetzt zu werden, das in einem Abschnitt der Fluidleitung durch deren Wandung gebildet ist. Die Gehäuseverschlusskappe und ein ihr gegenüberliegender Gehäuseboden fassen dann den Rotor in axialer Richtung ein. Die Bezeichnung "Gehäuseboden" wird dabei hier und im Folgenden unabhängig von einer räumlichen Ausrichtung des Gehäuses verwendet, insbesondere bedeutet sie nicht, dass der Gehäuseboden das Gehäuse vertikal nach unten abschließen muss.

Besonders bevorzugt ist eine Ausführungsform, die bei in das Gehäuse eingesetzter Rotorbaugruppe auf beiden Seiten des mindestens einen Antriebsflügels (also einerseits zwischen Antriebsflügel und Gehäuseverschlusskappe und andererseits zwischen Antriebsflügel und dem Gehäuseboden) je einen Fluiddurchlass aufweist, wobei diese Fluiddurchlässe im Wesentlichen die gleichen Ausmaße haben.

Die Fluiddurchlässe auf beiden Seiten des mindestens einen Antriebsflügels sind bei dieser Ausführungsform somit gleich groß und damit gleich wirkungsvoll. Dies bewirkt einen gleichartigen Fluidnachstrom von beiden Seiten des Rotors und vermindert daher Verschleiß.

Der Rotor kann eine Nabe aufweisen, in die die Rotorachse eingeführt ist oder wird. Die Nabe kann in einer axialen Richtung mindestens teilweise über eine der Gehäuseverschlusskappe zugewandte oder zuzuwendende Seitenkante des mindestens einen Antriebsflügels hinausragen. Dadurch kann der genannte Fluiddurchlass zwischen der Gehäuseverschlusskappe und dem mindestens einen Antriebsflügel einfach und ohne Zwischenringe realisiert werden, weil die bis an die Gehäuseverschlusskappe herangeführte herausragende Stelle der Nabe einen Abstand zwischen Antriebsflügel und Gehäuseverschlusskappe bewirkt.

Analog kann die Nabe - alternativ oder zusätzlich - an der gegenüberliegenden Seite über eine Seitenkante des mindestens einen Antriebsflügels hinausragen, die bei eingesetztem Rotor der Gehäuseverschlusskappe abgewandt ist. Diese Ausführungsform erlaubt analog eine einfache Sicherstellung eines Fluiddurchlasses zwischen dem mindestens einen Antriebsflügel und dem Gehäuseboden, der der Gehäuseverschlusskappe gegenüberliegt, ohne dass Zwischenringe erforderlich sind.

Bevorzugt ist eine Ausführungsform, bei der der Rotor einteilig ausgebildet ist.

Der erfindungsgemäße Durchflussmesser umfasst einen Rotor, ein Gehäuse für den Rotor, durch das die Fluidleitung führt, und einen Sensor zur Erfassung einer Rotation des Rotors. Das Gehäuse kann dabei integraler Bestandteil der Fluidleitung sein oder ein in die Fluidleitung eingesetztes separates Bauteil; im letzteren Fall kann das Gehäuse auch Teil der erfindungsgemäßen Rotorbaugruppe sein. Der Rotor umfasst mindestens einen Antriebsflügel und ist so in das Gehäuse eingesetzt, dass er im Gehäuse zwischen zwei Gehäusewänden angeordnet ist, wobei wobei zwischen jeder Gehäusewand und dem mindestens einen Antriebsflügel ein Fluiddurchlass ist.

Der Rotor kann dabei ein Rotor der oben beschriebenen Rotorbaugruppe sein, die in den Durchflussmesser eingesetzt ist. Die Gehäusewände werden dann durch die Gehäuseverschlusskappe einerseits und den Gehäuseboden andererseits gebildet.

Alternativ kann der Rotor des Durchflussmessers direkt in das Gehäuse eingebaut sein, also ohne, dass der Rotor Teil einer eine Gehäuseverschlusskappe umfassenden Baugruppe ist.

Vorzugsweise ist die Rotorachse beim Messen des Fluid-Durchflusses mindestens im Wesentlichen horizontal angeordnet.

Gemäß einer bevorzugten Ausführungsform weist der Rotor mehrere Antriebsflügel auf, die an den den Gehäusewänden zugewandten Seiten vorzugsweise so voneinander getrennt, dass ein Fluidzustrom zwischen die Antriebsflügel von diesen Seiten möglich ist. Die Fluiddurchlässe zwischen den Gehäusewänden und dem mindestens einen Antriebsflügel haben vorzugsweise beide im Wesentlichen die gleichen Ausmaße. Wie oben für die Rotorbaugruppe erläutert, lassen dann beide Fluiddurchlässe bei gleichem Druck gleich viel Fluid durch, was eine symmetrische und damit verschleißarme Belastung des Rotors bewirkt.

Der Durchflussmesser kann die oben in Bezug auf die Rotorbaugruppe beschriebenen Merkmale aufweisen. Insbesondere ist die Ausdehnung des mindestens einen Antriebsflügels in eine Richtung parallel zur Rotorachse vorzugsweise höchstens 8-mal, bevorzugter höchstens 6-mal, noch bevorzugter höchstens 4-mal so groß wie eine Breite jedes Fluiddurchlasses, also wie dessen Ausdehnung in die Richtung parallel zur Rotorachse, und/oder kann der Rotor eine Nabe umfassen, die einstückig mit dem mindestens einen Antriebsflügel ausgebildet ist und in axialer Richtung mindestens an einer Seite über den mindestens einen Antriebsflügel hinausragt.

Der Durchlaufmesser kann nach dem Hall-Prinzip unter Verwendung mindestens eines Dauermagneten arbeiten, oder er kann die Rotation des Rotors mit Hilfe eines Schwingkreises detektieren. Erfindungsgemäß umfasst die Rotorbaugruppe einen Rotor, der

(vorzugsweise einteilig) aus einem Kunststoff geformt ist (beispielsweise mittels eines Spritzgussverfahrens) und ganz oder teilweise mit einem dauermagnetischen oder einem elektrisch leitenden Material beschichtet ist. Derartige Rotoren sind günstig in der Herstellung und weisen eine geringe Masse auf, was sich vorteilhaft auf das Ansprechverhalten auf den Fluidstroms auswirkt.

Ein erfindungsgemäßes wasserführendes Haushaltsgerät umfasst einen erfindungsgemäßen Durchflussmesser. Es kann insbesondere ein Durchlauferhitzer, ein Wasserzähler oder ein Getränkespender sein, beispielsweise ein Heißgetränkevollautomat.

Im Folgenden werden bevorzugte Ausführungsbeispiele der Erfindung anhand schematischer Ausführungsbeispiele näher erläutert. Es zeigen:
Figur 1 eine Rotorbaugruppe für einen Durchflussmesser ohne erfindungsgemäßen Fluiddurchlass mit Bezeichnung der im Gebrauch wirkenden Zentrifugal- und Sogkräfte;
Figur 2 ein perspektivisches Schnittbild einer erfindungsgemäßen Rotorbaugruppe;
Figur 3 eine Explosionsdarstellung einer erfindungsgemäßen Rotorbaugruppe;
Figur 4a ein perspektivisches Schnittbild eines in eine Fluidleitung integrierten Gehäuses eines Durchflussmessers; und
Figur 4b ein perspektivisches Schnittbild des Gehäuses der Figur 4a mit eingesetzter Rotorbaugruppe gemäß einem Ausführungsbeispiel der Erfindung.

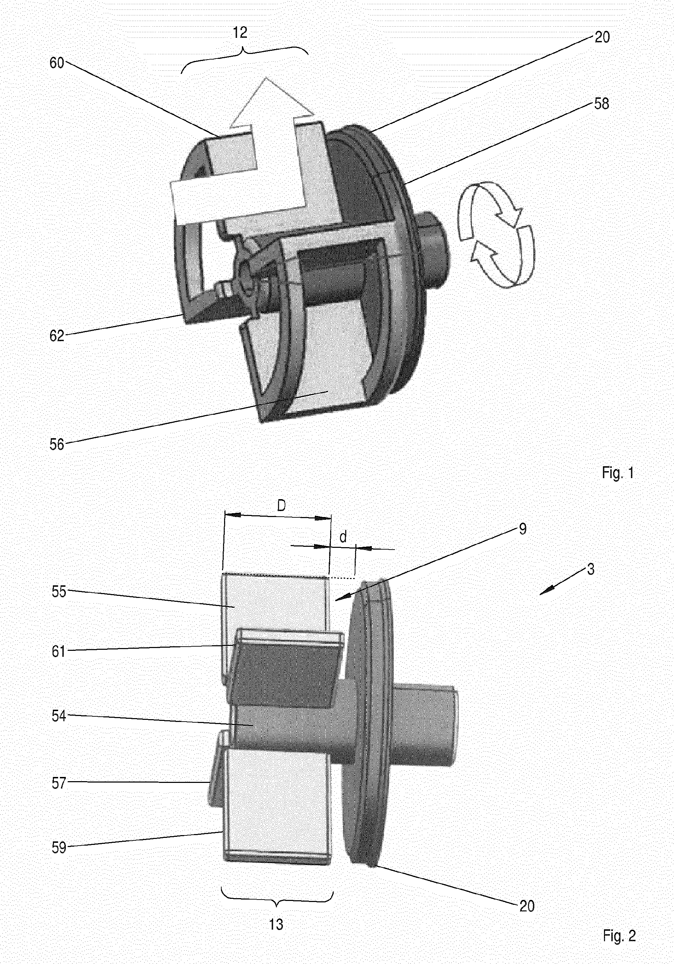

Die in Figur 1 gezeigte Rotorbaugruppe umfasst einen Rotor 12 und eine Gehäuseverschlusskappe 20, in der der Rotor 12 rotierbar verankert ist. Der Rotor weist Antriebsflügel 56, 58, 60 und 62 auf. Die Antriebsflügel 56, 58 bzw. 60, 62 sind miteinander über je zwei endseitige Ringbögen verbunden. Dadurch kann insbesondere eine Stabilisierung der Antriebsflügel erreicht werden. Wie durch den Blockpfeil angezeigt ist, wirken bei Rotation des Rotors Zentrifugalkräfte, die das Fluid nach außen, also in Richtung der Rotorperipherie treiben. In der Folge wird Fluid von der der Gehäuseverschlusskappe gegenüberliegenden Seite (links in der Darstellung der Figur 1) nachgesogen. Die asymmetrische Krafteinwirkung führt zu einem hohen Verschleiß an der Baugruppe.

In Figur 2 ist schematisch eine beispielhafte erfindungsgemäße Rotorbaugruppe dargestellt. Sie umfasst einen Rotor 13 und eine Gehäuseverschlusskappe 20. Der Rotor 13 weist eine Nabe 54 auf, die auf die Rotorachse geschoben wird und von der vier gleichartige Antriebsflügel 55, 57, 59, 61 abstehen, die gleichmäßig um die Nabe herum angeordnet sind. Die Antriebsflügel haben in axialer Richtung (also in einer Richtung parallel zur Rotorachse) eine Ausdehnung D.

Die Nabe 54 ragt auf der der Gehäuseverschlusskappe 20 zugewandten Seite um die Länge d über die entsprechenden Seitenkanten der Antriebsflügel hinaus. Dadurch sind die Antriebsflügel 55, 57, 59, 61 von der Gehäuseverschlusskappe 20 beabstandet, und entsteht ein Fluiddurchlass der Breite d (in Richtung parallel zur Rotorachse), ohne dass ein zusätzlicher Distanzring zwischen Gehäuseverschlusskappe 20 und Rotor 13 eingesetzt werden muss. Es entsteht eine ringförmige Materialaussparung 9 zwischen den Antriebsflügeln und der Gehäuseverschlusskappe 20 um die Rotorachse herum, die einen Fluiddurchfluss ermöglicht. So kann als Folge der zentrifugalen Verdrängung angesogenes Fluid von beiden Seiten in den Rotor 13 einströmen, was einen Verschleiß der verwendeten Teile reduziert. Vorzugsweise ist d ≥ 1/8 D oder sogar d ≥ 1/6, noch bevorzugter d ≥ 1/4 D.

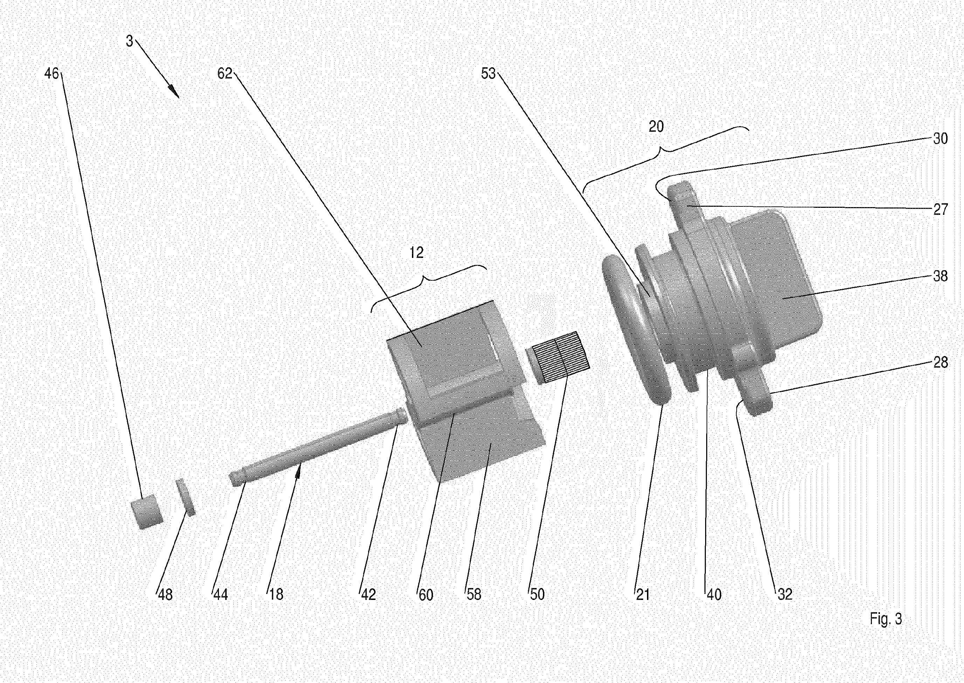

Figur 3 zeigt eine beispielhafte erfindungsgemäße Rotorbaugruppe in Explosionsdarstellung. Sie umfasst insbesondere eine Gehäuseverschlusskappe 20 und einen Rotor 12. Die Gehäuseverschlusskappe 20 ist dazu eingerichtet, ein Rotorgehäuse in einem Durchflussmesser zu verschließen. Sie umfasst zwei radial einander entgegengesetzte Anschläge 27, 28, die ohrenartig ausgebildet sind und jeweils eine stirnseitige Anschlagfläche 30, 32 zum Begrenzen einer axialen Einbauposition des Rotors 12 in dem Gehäuse aufweisen. Zur Handhabung weist die Gehäuseverschlusskappe 20 ein plattenartiges Griffelement 38 auf, das sich zwischen den Anschlägen 27, 28 erstreckt. Zur radialen Positionierung des Rotors 12 im Gehäuse hat die Gehäuseverschlusskappe 20 eine Umfangsnut 40 zur Aufnahme eines Dichtrings 21.

Von vier gleichmäßig um die Rotorachse 18 verteilten Antriebsflügeln sind in der Figur 3 die Antriebsflügel 56, 58 und 60 sichtbar.

Die Rotorachse 18 des Rotors 12 ist gemäß Figur 3 an beiden Enden mit jeweils einer ringartigen Rastnut 42, 44 versehen. Die der Gehäuseverschlusskappe 20 zugewandte (in der Darstellung der Figur 3 rechte) Rastnut 42 taucht in ein korrespondierendes Gegenelement der Gehäuseverschlusskappe 20 ein, wodurch die Rotorachse 18 formschlüssig in der Gehäuseverschlusskappe 20 verankert wird. Die der Gehäuseverschlusskappe abgewandte (gemäß der Darstellung in Figur 3 linke) Rastnut 44 wirkt mit einem auf die Drehachse 18 aufzuschiebenden Sicherungsring 46 zusammen, mittels dem der Rotor 12 auf der Rotorachse 18 in Axialrichtung gesichert ist. Zur Verbesserung des Drehverhaltens des Rotors 12 ist in der dargestellten Ausführungsform zwischen Rotor und Sicherungsring eine Distanzscheibe 48 angeordnet.

Zwischen Rotor 18 und der Gehäuseverschlusskappe 20 ist ein Distanzring 50 angeordnet, durch den ein Abstand zwischen dem Rotor 12 und der Gehäuseverschlusskappe 20 erzeugt wird. Insbesondere ist dadurch um den Distanzring 50 herum eine ringförmige Materialaussparung vorhanden, die einen Fluiddurchlass zwischen den Antriebsflügeln des Rotors und der Gehäuseverschlusskappe 20 bildet. Wenn im rotierenden Rotor 12 Fluid durch die Fliehkraft nach außen getrieben wird, kann somit kann Fluid an der der Gehäuseverschlusskappe 20 zugewandten Seite des Rotors 12 nachgesogen werden.

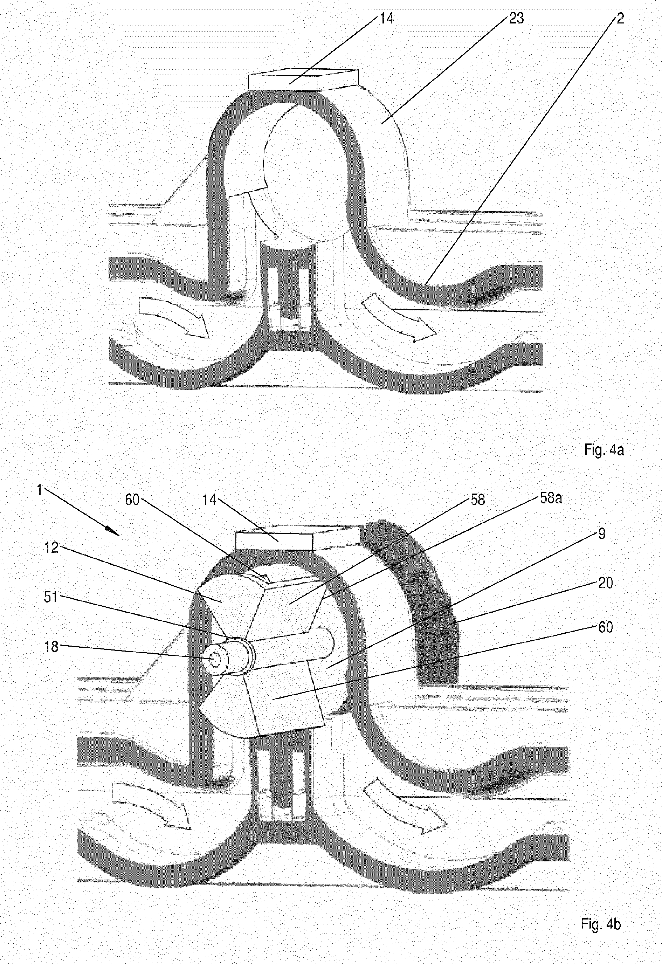

In den Figur 4a und 4b ist ein Schnittbild eines in eine Fluidleitung 2 integrierten Gehäuses 23 eines Durchflussmessers 1 gezeigt, und zwar mit eingesetzter Rotorbaugruppe in Figur 4b und ohne die Rotorbaugruppe in Figur 4a. Im Gebrauch des Durchflussmessers strömt Fluid in der durch die Pfeile angegebenen Richtung in das Gehäuse 23, wo es die Rotorachse 18 umläuft, ehe es aus dem Gehäuse austritt und in Pfeilrichtung weiterströmt.

Der Durchflussmesser weist eine Sensoreinheit 14 zur Erfassung der Rotation des Rotors auf. Aus dessen Drehzahl kann auf die Menge des durchgeflossenen Fluids geschlossen werden.

Die in Figur 4b dargestellte eingesetzte Rotorbaugruppe weist eine Gehäuseverschlusskappe 20 auf, die das Gehäuse in der gezeigten Perspektive an dessen Rückseite verschließt. Nicht gezeigt ist der an der gegenüberliegenden Seite angeordnete Gehäuseboden, der das Gehäuse in der dargestellten Perspektive an der Vorderseite abschließt. Die Rotorbaugruppe umfasst einen Rotor 12 mit einer Nabe 51, die auf die Rotorachse 18 geschoben ist und von der vier gleichartige Antriebsflügel abstehen; in der Darstellung sind nur die Antriebsflügel 56, 58 und 60 erkennbar.

In axialer Richtung ragt die Nabe über die der Gehäuseverschlusskappe zugewandten Seitenkanten der Antriebsflügel, insbesondere über die Seitenkante 58a des Antriebsflügels 58 hinaus, so dass an dieser Stelle ein Fluiddurchlass vorhanden ist. Insgesamt befindet sich zwischen den Antriebsflügeln und der Gehäuseverschlusskappe eine ringförmige Materialaussparung 9, die einen Fluidstrom zwischen Antriebsflügeln und Verschlusskappe und seitlich in den Rotor hinein ermöglicht.

Offenbart ist eine Rotorbaugruppe für einen Durchflussmesser zum Messen eines Fluid-Durchflusses in einer Fluidleitung, wobei die Rotorbaugruppe einen Rotor umfasst, der rotierbar um eine Rotorachse an einer Gehäuseverschlusskappe montiert ist und mindestens einen radial von der Rotorachse abstehenden Antriebsflügel aufweist. Zwischen dem mindestens einen Antriebsflügel und der Gehäuseverschlusskappe ist ein Fluiddurchlass angeordnet.

Offenbart ist ferner ein Durchflussmesser mit einem Rotor mit mindestens einem Antriebsflügel und einem Gehäuse, in dem Rotor axial zwischen zwei Gehäusewänden angeordnet ist. Zwischen dem mindestens einen Antriebsflügel und jeder Gehäusewand ist dabei jeweils ein Fluiddurchlass. Weiterhin offenbart ist ein Rotor für eine derartige Rotorbaugruppe und/oder für einen derartigen Durchflussmesser, sowie ein wasserführendes Haushaltsgerät mit einem Durchflussmesser.

### Bezugszeichenliste

- 1: Durchflussmesser
- 2: Fluidleitung
- 3: Rotorbaugruppe
- 9: Materialaussparung
- 12, 13: Rotor
- 14: Sensoreinheit
- 18: Rotorachse
- 20: Gehäuseverschlusskappe
- 21: Dichtring
- 23: Gehäuse
- 27, 28: Anschlag
- 30, 32: Anschlagfläche
- 38: Griffelement
- 40: Umfangsnut
- 42, 44: Rastnut
- 46: Sicherungsring
- 48: Distanzscheibe
- 50: Distanzscheibe
- 54: Nabe
- 56 - 62: Antriebsflügel
- 58a: Seitenkante des Antriebsflügels 58

- d: Fluiddurchlassbreite
- D: Antriebsflügelausdehnung in axialer Richtung

## Patentansprüche

1. Rotorbaugruppe (3) für einen Durchflussmesser (1) zum Messen eines Fluid-Durchflusses in einer Fluidleitung (2), wobei die Rotorbaugruppe einen Rotor (12, 13) umfasst, der rotierbar um eine Rotorachse (18) an einer Gehäuseverschlusskappe (20) montiert ist und mindestens einen radial von der Rotorachse abstehenden Antriebsflügel (56, 57, 58, 59) aufweist, wobei zwischen dem mindestens einen Antriebsflügel und der Gehäuseverschlusskappe ein Fluiddurchlass angeordnet ist, wobei der Rotor (12, 13) aus einem Kunststoff geformt ist, **dadurch gekennzeichnet, dass** der Rotor (12, 13) ganz oder teilweise mit einem dauermagnetischen oder einem elektrisch leitenden Material beschichtet ist.

2. Rotorbaugruppe gemäß Anspruch 1, wobei der Rotor (12, 13) zwei oder mehr radial von der Rotorachse abstehende Antriebsflügel (56, 57, 58, 59) aufweist, die von der Gehäuseverschlusskappe (20) so beabstandet sind, dass eine ringförmige Materialaussparung (9) zwischen den Antriebsflügeln und der Gehäuseverschlusskappe um die Rotorachse (18) herum einen Fluiddurchfluss ermöglicht.

3. Rotorbaugruppe gemäß einem der vorhergehenden Ansprüche, wobei der Fluiddurchlass in Richtung parallel zur Rotorachse (18) eine Ausdehnung (d) hat, die mindestens 1/8, bevorzugter mindestens 1/6 oder mindestens ¼ einer Ausdehnung (D) des mindestens einen Antriebsflügels in axialer Richtung beträgt.

4. Rotorbaugruppe gemäß einem der Ansprüche 1 bis 3, wobei der Fluiddurchlass ein erster Fluiddurchlass ist und der Rotor (12, 13) dazu eingerichtet ist, in ein in einem Abschnitt der Fluidleitung (2) durch deren Wandung gebildetes Gehäuse (23) so eingesetzt zu werden, dass der Rotor im Gehäuse zwischen der Gehäuseverschlusskappe (20) und einem dieser gegenüberliegenden Gehäuseboden angeordnet ist, wobei zwischen dem Gehäuseboden und dem mindestens einen Antriebsflügel (56, 57, 58, 59) ein zweiter Fluiddurchlass ist, und wobei der erste und der zweite Fluiddurchlass im Wesentlichen gleiche Ausmaße haben.

5. Rotorbaugruppe gemäß einem der vorhergehenden Ansprüche, wobei der Rotor eine Nabe (51) aufweist, die in einer Richtung parallel zur Rotorachse (18) mindestens teilweise über eine der Gehäuseverschlusskappe (20) zugewandte Seitenkante (58a) und/ oder über eine der Gehäuseverschlusskappe abgewandte Seitenkante des mindestens einen Antriebsflügels (56, 57, 58, 59) hinausragt.

6. Durchflussmesser (1) zum Messen eines Fluid-Durchflusses in einer Fluidleitung (2), wobei der Durchflussmesser einen Rotor (12) mit mindestens einem Antriebsflügel (56, 57, 58, 59) und ein Gehäuse (23) für den Rotor aufweist, durch das die Fluidleitung führt, wobei der Rotor im Gehäuse axial zwischen zwei Gehäusewänden angeordnet ist, wobei zwischen dem mindestens einen Antriebsflügel und jeder Gehäusewand jeweils ein Fluiddurchlass (9) ist, wobei der Rotor (12, 13) aus einem Kunststoff geformt ist, **dadurch gekennzeichnet, dass** der Rotor (12, 13) ganz oder teilweise mit einem dauermagnetischen oder einem elektrisch leitenden Material beschichtet ist.

7. Durchflussmesser(1) gemäß Anspruch 6, wobei der Rotor Teil einer Rotorbaugruppe gemäß einem der Ansprüche 1 bis 5 ist.

8. Durchflussmesser gemäß Anspruch 6, wobei der Rotor eine Nabe (51) aufweist, die in einer Richtung parallel zur Rotorachse (18) mindestens teilweise über eine Seitenkante (58a) des mindestens einen Antriebsflügels (56, 57, 58, 59) hinausragt, die einer der Gehäusewände zugewandt ist.

9. Wasserführendes Haushaltsgerät mit einem Durchflussmesser (1) gemäß einem der Ansprüche 6 oder 7.

10. Rotor (12, 13) für eine Rotorbaugruppe gemäß Anspruch 5, wobei die Nabe (51) einstückig mit dem mindestens einen Antriebsflügel (56, 57, 58, 59) gefertigt ist.

## Claims

1. Rotor assembly (3) for a flowmeter (1) for measuring a fluid throughflow in a fluid line (2), wherein the rotor assembly comprises a rotor (12, 13) which is mounted so as to be rotatable about a rotor shaft (18) on a housing closure cap (20) and has at least one drive blade (56, 57, 58, 59) projecting radially from the rotor shaft, wherein a fluid passage is arranged between the at least one drive blade and the housing closure cap, wherein the rotor (12, 13) is formed from a plastic, **characterized in that** the rotor (12, 13) is completely or partially coated with a permanently magnetic material or with an electrically conductive material.

2. Rotor assembly according to Claim 1, wherein the rotor (12, 13) has two or more drive blades (56, 57, 58, 59) which project radially from the rotor shaft and which are spaced apart from the housing closure cap (20) in such a way that an annular material clearance (9) between the drive blades and the housing closure cap around the rotor shaft (18) allows fluid throughflow.

3. Rotor assembly according to either of the preceding claims, wherein the fluid passage has, in a direction parallel to the rotor shaft (18), an extent (d) which is at least 1/8, preferably at least 1/6 or at least 1/4, of an extent (D) of the at least one drive blade in the axial direction.

4. Rotor assembly according to one of Claims 1 to 3, wherein the fluid passage is a first fluid passage and the rotor (12, 13) is designed to be inserted into a housing (23) formed in a portion of the fluid line (2) by the wall thereof in such a way that the rotor is arranged in the housing between the housing closure cap (20) and a housing base situated opposite the latter, wherein there is a second fluid passage between the housing base and the at least one drive blade (56, 57, 58, 59), and wherein the first and the second fluid passage have substantially the same dimensions.

5. Rotor assembly according to one of the preceding claims, wherein the rotor has a hub (51) which projects, in a direction parallel to the rotor shaft (18), at least partially beyond a lateral edge (58a), which faces the housing closure cap (20), and/or beyond a lateral edge, which faces away from the housing closure cap, of the at least one drive blade (56, 57, 58, 59).

6. Flowmeter (1) for measuring a fluid throughflow in a fluid line (2), wherein the flowmeter has a rotor (12) with at least one drive blade (56, 57, 58, 59) and a housing (23) for the rotor through which the fluid line leads, wherein the rotor is arranged in the housing axially between two housing walls, wherein there is in each case a fluid passage (9) between the at least one drive blade and each housing wall, wherein the rotor (12, 13) is formed from a plastic, **characterized in that** the rotor (12, 13) is completely or partially coated with a permanently magnetic material or with an electrically conductive material.

7. Flowmeter (1) according to Claim 6, wherein the rotor is part of a rotor assembly according to one of Claims 1 to 5.

8. Flowmeter according to Claim 6, wherein the rotor has a hub (51) which projects, in a direction parallel to the rotor shaft (18), at least partially beyond a lateral edge (58a) of the at least one drive blade (56, 57, 58, 59), said lateral edge facing one of the housing walls.

9. Water-conducting domestic appliance having a flowmeter (1) according to either of Claims 6 and 7.

10. Rotor (12, 13) for a rotor assembly according to Claim 5, wherein the hub (51) is produced in one piece with the at least one drive blade (56, 57, 58, 59) .

## Revendications

1. Ensemble de rotor (3) pour un débitmètre (1) pour la mesure d'un débit de fluide dans une conduite de fluide (2), l'ensemble de rotor comprenant un rotor (12, 13), qui est monté de manière rotative autour d'un axe de rotor (18) sur un capuchon de fermeture de boîtier (20) et présente au moins une ailette d'entraînement (56, 57, 58, 59) en saillie radialement à partir de l'axe de rotor, un passage de fluide étant agencé entre l'au moins une ailette d'entraînement et le capuchon de fermeture de boîtier, le rotor (12, 13) étant moulé en une matière plastique, **caractérisé en ce que** le rotor (12, 13) est entièrement ou partiellement revêtu d'un matériau à aimantation permanente ou électriquement conducteur.

2. Ensemble de rotor selon la revendication 1, dans lequel le rotor (12, 13) présente deux ailettes d'entraînement ou plus (56, 57, 58, 59) en saillie radialement à partir de l'axe de rotor, qui sont espacées du capuchon de fermeture de boîtier (20) de telle sorte qu'un évidement de matériau annulaire (9) entre les ailettes d'entraînement et le capuchon de fermeture de boîtier autour de l'axe de rotor (18) permet un écoulement de fluide.

3. Ensemble de rotor selon l'une quelconque des revendications précédentes, dans lequel le passage de fluide a une étendue (d) dans la direction parallèle à l'axe de rotor (18) qui est d'au moins 1/8, de manière davantage préférée d'au moins 1/6 ou d'au moins 1/4 d'une étendue (D) de l'au moins une ailette d'entraînement dans la direction axiale.

4. Ensemble de rotor selon l'une quelconque des revendications 1 à 3, dans lequel le passage de fluide est un premier passage de fluide et le rotor (12, 13) est adapté pour être inséré dans un boîtier (23) formé dans une section de la conduite de fluide (2) à travers la paroi de celui-ci, de telle sorte que le rotor est agencé dans le boîtier entre le capuchon de fermeture de boîtier (20) et un fond de boîtier opposé à celui-ci, un deuxième passage de fluide étant situé entre le fond de boîtier et l'au moins une ailette d'entraînement (56, 57, 58, 59), et le premier et le deuxième passage de fluide ayant des dimensions essentiellement égales.

5. Ensemble de rotor selon l'une quelconque des revendications précédentes, dans lequel le rotor présente un moyeu (51) qui, dans une direction parallèle à l'axe de rotor (18), dépasse au moins partiellement au-delà d'un bord latéral (58a) faisant face au capuchon de fermeture de boîtier (20) et/ou au-delà d'un bord latéral de l'au moins une ailette d'entraînement (56, 57, 58, 59) détourné du capuchon de fermeture de boîtier.

6. Débitmètre (1) pour la mesure d'un débit de fluide dans une conduite de fluide (2), le débitmètre présentant un rotor (12) ayant au moins une ailette d'entraînement (56, 57, 58, 59) et un boîtier (23) pour le rotor, à travers lequel passe la conduite de fluide, le rotor étant agencé axialement dans le boîtier entre deux parois de boîtier, un passage de fluide (9) étant situé respectivement entre l'au moins une ailette d'entraînement et chaque paroi de boîtier, le rotor (12, 13) étant moulé en une matière plastique, **caractérisé en ce que** le rotor (12, 13) est entièrement ou partiellement revêtu d'un matériau à aimantation permanente ou électriquement conducteur.

7. Débitmètre (1) selon la revendication 6, dans lequel le rotor fait partie d'un ensemble de rotor selon l'une quelconque des revendications 1 à 5.

8. Débitmètre selon la revendication 6, dans lequel le rotor présente un moyeu (51) qui, dans une direction parallèle à l'axe de rotor (18), dépasse au moins partiellement au-delà d'un bord latéral (58a) de l'au moins une ailette d'entraînement (56, 57, 58, 59), qui est tourné vers l'une des parois de boîtier.

9. Appareil ménager conduisant de l'eau, comprenant un débitmètre (1) selon l'une quelconque des revendications 6 ou 7.

10. Rotor (12, 13) pour un ensemble de rotor selon la revendication 5, dans lequel le moyeu (51) est fabriqué d'un seul tenant avec l'au moins une ailette d'entraînement (56, 57, 58, 59).
